# EUROPEAN PATENT APPLICATION

(11) **EP 4 797 879 A1**
(43) Date of publication of application: **26.08.2026**
(21) Application number: 25225991.6
(22) Date of filing: 19.12.2025
(51) Int. Cl.: H05B 47/125, H05B 47/155, H05B 47/10, H05B 47/175, F21V 23/04, G06V 10/141, G06V 10/82, G06V 20/10, F21V 21/15

(54) **LIGHTING CONTROL METHOD, LIGHTING DEVICE, LIGHTING CONTROL SYSTEM, AND TERMINAL DEVICE**

(30) Priority: 19.02.2025 CN 202510184895
(71) Applicant: Aero Light Co., Limited, Guangzhou, Guangdong 510000 (CN)
(72) Inventor: ZHONG, NIYANG, Guangzhou, 510000 (CN); HUANG, ZEYONG, Guangzhou, 510000 (CN)
(74) Representative: Chung, Hoi Kan

(57) **Abstract**

Embodiments of the present invention disclose a lighting control method, a lighting device, a lighting control system, and a terminal device. The lighting device provided by the embodiments of the present invention can automatically identify a corresponding target object according to an object type required by a user to be illuminated and illuminate the target object. Furthermore, the lighting effect is determined according to a dimming mode selected by the user, which can improve the lighting effect on the object, solving the technical problem existing in the prior art where the lighting effect is poor when using lights to illuminate objects. In addition, the embodiments of the present invention do not require the user to manually set lighting parameters and adjust light positions during the lighting process, resulting in a high degree of intelligence and further improving the user experience.

## Description

### TECHNICAL FIELD

Embodiments of the present application relate to the field of lighting control, and in particular, to a lighting control method, a lighting device, a lighting control system, and a terminal device.

### BACKGROUND

In the prior art, lighting control typically relies on manual adjustment or simple RGB-based visual recognition. However, RGB sensors cannot distinguish between materials having similar colors but different optical properties (e.g., metamerism between real flowers and artificial plastic flowers). Consequently, a light source may project a color temperature suited for a matte surface onto a glossy surface, causing glare or unnatural color rendering. Furthermore, existing automated lights often suffer from parallax errors when the sensor and the light source are not aligned, leading to inaccurate illumination of the target object.

Therefore, there is a technical need for a system that accurately acquires physical material properties and precisely aligns the light beam without manual intervention.

### SUMMARY

Embodiments of the present invention provide a lighting control method, a lighting device, a lighting control system, and a terminal device, which solve the technical problem of poor lighting effects when using lights to illuminate objects in the prior art.

In a first aspect, an embodiment of the present invention provides a lighting control method applicable to a lighting device. The lighting device comprises a light source assembly, an information acquisition assembly, a movement assembly, and a communication module. The information acquisition assembly is disposed on the light source assembly and comprises an image acquisition module and a spectral sensor. The image acquisition module and the spectral sensor are coaxially arranged. The movement assembly is configured to drive the light source assembly to rotate. The communication module is configured to communicate with a terminal device. The method comprises: receiving object type information and dimming mode information sent by the terminal device via the communication module; determining a target object type according to the object type information, and determining a target dimming model according to the dimming mode information; controlling the movement assembly to drive the light source assembly to rotate at least one full rotation, so as to determine a target orientation and environmental color information based on a plurality of environment images acquired by the image acquisition module, wherein the target orientation is an orientation of a position where a target object corresponding to the target object type is located; controlling the movement assembly to drive the light source assembly to orient towards the target orientation, so as to acquire a target image of the target object via the image acquisition module and acquire spectral information of the target object via the spectral sensor; and determining lighting parameters of the light source assembly according to the target object type, the environmental color information, the target image, the spectral information, and the target dimming model, and controlling the light source assembly to emit light according to the lighting parameters.

Optionally, the step of determining lighting parameters of the light source assembly according to the target object type, the environmental color information, the target image, the spectral information, and the target dimming model comprises: determining object color information of the target image; determining material information and color temperature information of the target object according to the spectral information; and inputting the target object type, the environmental color information, the object color information, the material information, and the color temperature information into the target dimming model, so as to determine the lighting parameters of the light source assembly via the target dimming model.

Optionally, the step of controlling the movement assembly to drive the light source assembly to rotate at least one full rotation, so as to determine a target orientation and environmental color information based on a plurality of environment images acquired by the image acquisition module comprises: controlling the movement assembly to drive the light source assembly to rotate at least one full rotation, and during the rotation, periodically controlling the image acquisition module to acquire environment images; after the movement assembly completes the rotation, identifying a target object corresponding to the target object type in the plurality of environment images captured by the image acquisition module; determining a rotation angle of the movement assembly at the time when the environment image containing the target object was acquired, and determining the target orientation of the target object according to the rotation angle; and determining the environmental color information according to the plurality of environment images.

Optionally, the step of determining the environmental color information according to the plurality of environment images comprises: determining color information of each of the environment images, wherein the color information comprises saturation, hue, and brightness; and determining a saturation average value, a hue average value, and a brightness average value of all the environment images to obtain the environmental color information.

Optionally, the step of determining a rotation angle of the movement assembly at the time when the environment image containing the target object was acquired, and determining the target orientation of the target object according to the rotation angle comprises: determining a capturing time of each environment image containing the target object, and determining a target environment image that is captured at the earliest capturing time; and determining the target orientation of the target object according to the rotation angle of the movement assembly when acquiring the target environment image.

Optionally, the movement assembly is further configured to adjust a target included angle between the light source assembly and an axis vertical to the ground; and in a case where the target orientation cannot be determined from the plurality of environment images, the method further comprises: adjusting the target included angle via the movement assembly, and subsequently controlling the movement assembly to drive the light source assembly to rotate at least one full rotation, so as to re-determine the target orientation and the environmental color information via a plurality of environment images acquired by the image acquisition module.

In a second aspect, an embodiment of the present invention provides a lighting device. The lighting device comprises a light source assembly, an information acquisition assembly, a movement assembly, and a communication module. The information acquisition assembly is disposed on the light source assembly and comprises an image acquisition module and a spectral sensor. The image acquisition module and the spectral sensor are coaxially arranged. The movement assembly is configured to drive the light source assembly to rotate. The communication module is configured to communicate with the lighting device. The lighting device further comprises a processor and a memory; the memory is configured to store a computer program and transmit the computer program to the processor; the processor is configured to execute the lighting control method according to the first aspect based on instructions in the computer program.

In a third aspect, an embodiment of the present invention provides a lighting control system. The lighting control system comprises a control terminal and a plurality of the lighting devices according to the second aspect. The control terminal is configured to communicate with each of the lighting devices and to communicate with a terminal device. A map of an environmental space where the lighting devices are located is set in the control terminal, wherein the map records coordinates of each of the lighting devices, an installation height, and an orientation direction of the light source assembly when a rotation angle is at a zero point; the lighting device is further configured to upload a current rotation angle of the movement assembly to the control terminal after the light source assembly is oriented towards the target orientation; the control terminal is configured to receive an object height corresponding to the target object type sent by the terminal device; and configured to, after receiving the rotation angle sent by each of the lighting devices, determine target coordinates of the target object towards which each of the lighting devices is oriented in the map according to the rotation angle, the installation height, and the object height; and configured to control the movement assembly of one of the lighting devices to rotate again to determine a new target orientation when a distance between target coordinates corresponding to any two of the lighting devices is within a preset distance.

In a fourth aspect, an embodiment of the present invention provides a terminal device. The terminal device is communicatively connected to a plurality of the lighting devices according to the second aspect. The terminal device is configured to, in response to a device selection instruction, determine a target lighting device from the plurality of lighting devices; and in response to a parameter setting instruction, determine object type information and dimming mode information, and send the object type information and the dimming mode information to the target lighting device; and in response to a rotation angle adjustment instruction, determine a target rotation angle, and send the target rotation angle to the target lighting device, so as to control the movement assembly of the target lighting device to rotate to the target rotation angle.

In a fifth aspect, an embodiment of the present invention provides a storage medium storing computer-executable instructions, wherein the computer-executable instructions, when executed by a computer processor, are configured to execute the lighting control method according to the first aspect.

As described above, embodiments of the present invention provide a lighting control method, a lighting device, a lighting control system, and a terminal device. In the embodiments of the present invention, after a user sets a required lighting object type and a dimming mode on a terminal device, the terminal device generates corresponding object type information and dimming mode information, and sends the object type information and the dimming mode information to the lighting device. After the lighting device determines the target object type and the target dimming model respectively according to the object type information and the dimming mode information, it controls the movement assembly to drive the light source assembly to rotate at least one full rotation, so as to identify a target orientation where the target object is located and environmental color information through a plurality of environment images acquired by the image acquisition module. Subsequently, the lighting device can control the movement assembly to drive the light source assembly to orient towards the target orientation, to acquire a target image of the target object via the image acquisition module and acquire spectral information of the target object via the spectral sensor, and determine lighting parameters of the light source assembly according to the target object type, the environmental color information, the target image, the spectral information, and the target dimming model, and control the light source assembly to emit light according to the lighting parameters. In the embodiments of the present invention, the lighting device can automatically identify a corresponding target object according to the object type required by the user to be illuminated and illuminate the target object, and the lighting effect is determined according to the dimming mode selected by the user, which can improve the lighting effect on the object and solve the technical problem in the prior art where the lighting effect is poor when using lights to illuminate objects. Additionally, the embodiments of the present invention do not require the user to manually set lighting parameters and adjust light positions during the lighting process, resulting in a high degree of intelligence and further improving the user experience.

### BRIEF DESCRIPTION OF THE DRAWINGS

FIG. 1 is a flowchart of a lighting control method provided by an embodiment of the present invention.
FIG. 2 is a schematic structural diagram of a lighting device provided by an embodiment of the present invention.
FIG. 3 is a schematic diagram of a map provided by an embodiment of the present invention.
FIG. 4 is a schematic diagram of a graphical interface provided by an embodiment of the present invention.
FIG. 5 is a schematic diagram of a movement assembly adjusting a target included angle between a light source assembly and an axis vertical to the ground provided by an embodiment of the present invention.
FIG. 6 is a schematic circuit structure diagram of a lighting device provided by an embodiment of the present invention.
FIG. 7 is a schematic structural diagram of a lighting control system provided by an embodiment of the present invention.
FIG. 8 is a schematic diagram of a positional relationship between a target object and a lighting device provided by an embodiment of the present invention.

Reference Numerals: 10: Lighting Device; 11: Light Source Assembly; 12: Movement Assembly; 13: Image Acquisition Module; 14: Spectral Sensor; 15: Communication Module; 16: Information Acquisition Assembly; 17: Processor; 18: Memory; 19: Computer Program; 20: Control Terminal; 30: Terminal Device.

### DETAILED DESCRIPTION

The following description and the accompanying drawings sufficiently illustrate specific embodiments of the present application to enable those skilled in the art to practice them. Embodiments represent only possible variations. Unless explicitly required, individual components and functions are optional, and the order of operations may vary. Parts and features of some embodiments may be included in or substitute for parts and features of other embodiments. The scope of the embodiments of the present application comprises the entire scope of the claims and all available equivalents thereof. Herein, various embodiments may be individually or collectively referred to by the term "invention" merely for convenience and not to automatically limit the scope of the application to any single invention or inventive concept if more than one invention is in fact disclosed. Herein, relational terms such as first and second are used merely to distinguish one entity or operation from another entity or operation, and do not require or imply any actual relationship or order between these entities or operations. Moreover, the terms "comprise," "include," or any other variation thereof are intended to cover a non-exclusive inclusion, such that a process, method, or device comprising a series of elements not only comprises those elements but also comprises other elements not expressly listed. In this document, various embodiments are described in a progressive manner, with each embodiment focusing on differences from other embodiments, and identical or similar parts between various embodiments may be referred to mutually. For structures, products, etc., disclosed in the embodiments, the descriptions are relatively simple as they correspond to the parts disclosed in the embodiments; for relevant details, reference may be made to the method part descriptions.

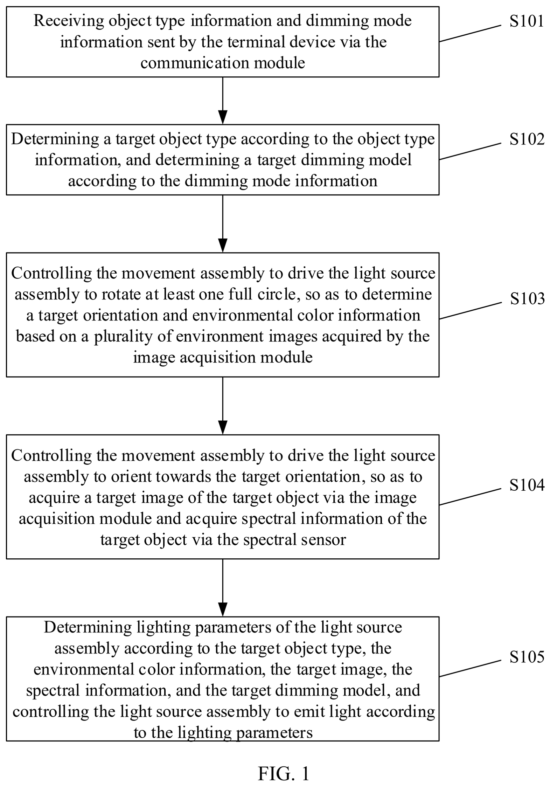

As shown in FIG. 1, FIG. 1 is a flowchart of a lighting control method provided by an embodiment of the present invention. The lighting control method provided by this embodiment of the present invention may be executed by a lighting device. The lighting device comprises a light source assembly, an information acquisition assembly, a movement assembly, and a communication module. The information acquisition assembly is disposed on the light source assembly, and comprises an image acquisition module and a spectral sensor. The image acquisition module and the spectral sensor are coaxially arranged. The movement assembly is configured to drive the light source assembly to rotate. The communication module is configured to communicate with a terminal device.

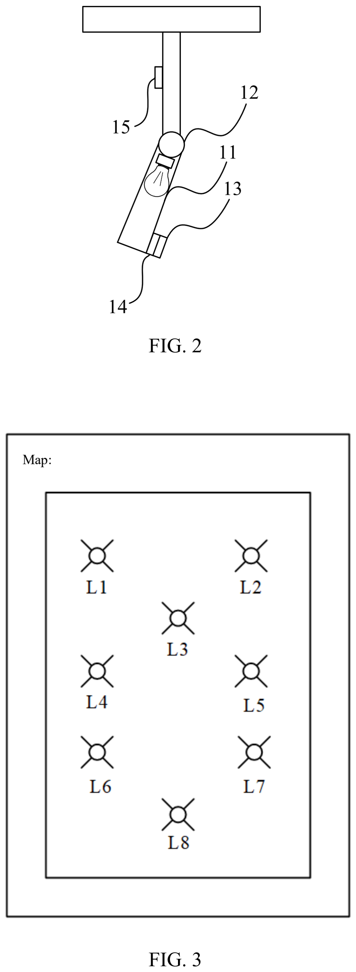

Illustratively, as shown in FIG. 2, FIG. 2 is a schematic structural diagram of a lighting device provided by an embodiment of the present invention. In FIG. 2, the light source assembly 11 of the lighting device comprises a dimmable LED light. The movement assembly 12 employs a motor. The image acquisition module 13 employs a camera. The camera is coaxially installed with a probe of the spectral sensor 14 (e.g., a spectral confocal sensor), meaning their lenses or probes are located on the same axis. The movement assembly 12 can drive the light source assembly 11 to rotate clockwise or counterclockwise around a certain center, thereby driving the image acquisition module 13 and the spectral sensor 14 disposed on the light source assembly 11 to rotate together around the circumference, wherein the center of the circumference can be preset according to actual needs. In addition, the lighting device can be wirelessly connected to a terminal device such as a mobile phone or a tablet via the communication module 15, enabling communication between the lighting device and the terminal device. Specifically, the coaxial arrangement ensures that the field of view of the image acquisition module 13 and the measurement spot of the spectral sensor 14 are aligned along the same optical axis. This physical configuration eliminates parallax errors that would occur if the sensors were offset. It ensures that the spectral information (representing material properties) acquired in step 104 corresponds exactly to the specific pixel region of the target object identified in the target image, thereby guaranteeing the accuracy of the data input into the dimming model.

The lighting control method provided by the embodiment of the present invention comprises:

Step 101: Receiving object type information and dimming mode information sent by the terminal device via the communication module.

When a user needs to control the lighting device to illuminate a certain object, the user can select a certain lighting device on the terminal device and determine the object type (e.g., a round table, sofa, green plant, or piano, etc.) required to be illuminated by the lighting device and a dimming mode. After generating the object type information according to the object type and generating the dimming mode information according to the dimming mode, the terminal device sends the object type information and the dimming mode information to the lighting device selected by the user. The lighting device receives the object type information and the dimming mode information sent by the terminal device via the communication module.

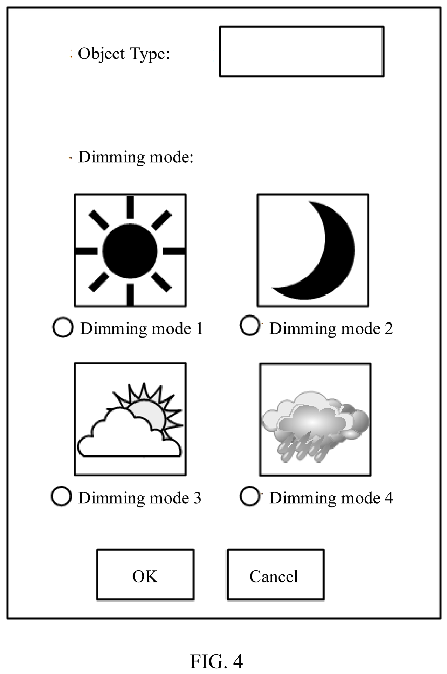

Illustratively, an APP for controlling the lighting device is installed on the terminal device. A graphical interface of the APP displays a map of the environmental space where the lighting device is located. The map displays each lighting device and the location of each lighting device, as shown in FIG. 3. FIG. 3 is a schematic diagram of a map provided by an embodiment of the present invention, in which L1 to L8 are all lighting devices. The position of each lighting device can be marked and recorded in the map during installation. When the user needs to control the lighting device to illuminate a certain object, the user can select one or more lighting devices required to be controlled on the map. After the selection is completed, an object type input box and dimming mode selection options will pop up on the graphical interface of the terminal device, as shown in FIG. 4. FIG. 4 is a schematic diagram of a graphical interface provided by an embodiment of the present invention. After the user inputs the object type in the object type input box and selects the corresponding dimming mode in the dimming mode options, and triggers a "Confirm" button to confirm the information, the terminal device can generate the corresponding object type information and dimming mode information, and send the object type information and dimming mode information to the lighting device selected by the user. In another embodiment, the user may also input the object type to the terminal device by uploading a photo comprising the object.

Step 102: Determining a target object type according to the object type information, and determining a target dimming model according to the dimming mode information.

The lighting device determines a corresponding target object type according to the received object type information, determines a corresponding dimming mode according to the dimming mode information, and determines a target dimming model corresponding to the dimming mode. In this embodiment, the target dimming model is obtained in advance by training a neural network or a deep learning network, and each dimming mode corresponds to one target dimming model.

Step 103: Controlling the movement assembly to drive the light source assembly to rotate at least one full rotation, so as to determine a target orientation and environmental color information based on a plurality of environment images acquired by the image acquisition module.

The target orientation is an orientation of a position where a target object corresponding to the target object type is located. After determining the target object type and the target dimming model, the lighting device needs to control the movement assembly to drive the light source assembly to rotate at least one full rotation around the center, and control the image acquisition module to capture a plurality of environment images during the rotation process of the light source assembly. After the rotation of the light source assembly is completed, a target object corresponding to the target object type is identified in the plurality of environment images acquired by the image acquisition module. After identifying the target object, the target orientation corresponding to the target object is determined. The target orientation is the orientation of the position where the target object corresponding to the target object type is located. When the lighting device is oriented towards the target orientation, the image acquisition module is able to directly face the target object. At the same time, the lighting device also needs to extract color information from the plurality of environment images and determine the environmental color information of the surrounding environment according to the color information extracted from the plurality of environment images. In one embodiment, the light source assembly of the lighting device faces vertically downward in an initial state. After the camera of the lighting device is started, it captures an image directly below the lighting device. If the target object exists in the image directly below, the lighting device can lock the target orientation corresponding to the target object in advance. Afterwards, the lighting device then controls the posture of the light source assembly to tilt by a certain angle, and then controls the light source assembly to rotate at least one full rotation via the movement assembly to acquire environment images.

In one embodiment, the controlling the movement assembly to drive the light source assembly to rotate at least one full rotation to determine a target orientation and environmental color information based on a plurality of environment images acquired by the image acquisition module in Step 103 comprises:

Step 1031: Controlling the movement assembly to drive the light source assembly to rotate at least one full rotation, and during the rotation, periodically controlling the image acquisition module to acquire environment images.

In this embodiment, the lighting device first controls the movement assembly to drive the light source assembly to rotate at least one full rotation, and during the rotation process of the light source assembly, periodically controls the image acquisition module to acquire environment images, wherein the duration of the period can be set according to actual needs.

Step 1032: After the movement assembly completes rotation, identifying a target object corresponding to the target object type in the plurality of environment images captured by the image acquisition module.

After the movement assembly completes rotation, it is necessary to identify the target object corresponding to the target object type in the plurality of environment images captured by the image acquisition module. Existing algorithms may be employed for the target object identification algorithm, and specific selection may be made according to actual needs; this embodiment does not elaborate on this in detail.

Step 1033: Determining a rotation angle of the movement assembly at the time when the environment image containing the target object was acquired, and determining the target orientation of the target object according to the rotation angle.

After identifying the target object, the environment image where the target object is located is further determined, and the rotation angle of the movement assembly when the environment image containing the target object was acquired is determined. The target orientation of the target object is determined according to the rotation angle of the movement assembly. In one embodiment, it is possible for the lighting device to identify the target object in multiple environment images respectively. In this case, the target orientation can be determined according to the target object captured earliest. Specifically, the lighting device first determines the capturing time of each environment image containing the target object and determines the target environment image with the earliest capturing time. Afterwards, the target orientation of the target object is determined according to the rotation angle of the movement assembly when acquiring the target environment image; that is, the orientation of the light source assembly when shooting the target environment image is taken as the target orientation.

Step 1034: Determining the environmental color information according to the plurality of environment images.

While determining the target orientation, the lighting device also needs to determine the environmental color information of the surrounding environment according to the plurality of environment images acquired by the image acquisition module. Specifically, the lighting device first determines the color information of each environment image. In this embodiment, the color information of each environment image comprises saturation, hue, and brightness. One environment image corresponds to one saturation, one hue, and one brightness. Afterwards, a saturation average value, a hue average value, and a brightness average value of all environment images are further determined to obtain the environmental color information.

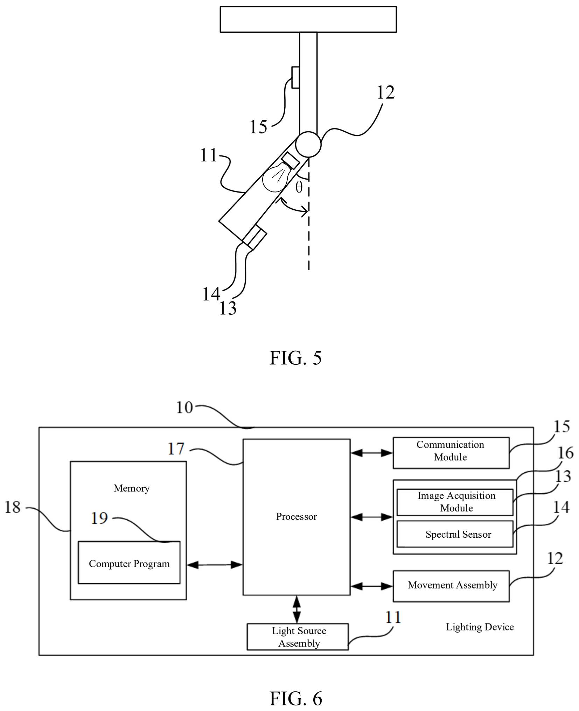

Based on the above embodiment, the movement assembly is further configured to adjust a target included angle between the light source assembly and an axis vertical to the ground. Illustratively, as shown in FIG. 5, FIG. 5 is a schematic diagram of the movement assembly adjusting a target included angle between the light source assembly and an axis vertical to the ground according to an embodiment of the present invention. In FIG. 5, θ is the target included angle. In a case where the target orientation cannot be determined from the plurality of environment images, the method further comprises:

Adjusting the target included angle via the movement assembly, and subsequently controlling the movement assembly to drive the light source assembly to rotate at least one full rotation, so as to re-determine the target orientation and the environmental color information via a plurality of environment images acquired by the image acquisition module.

In one embodiment, after the movement assembly drives the light source assembly to rotate, there may be a situation where the image acquisition module fails to capture the target object, resulting in the lighting device being unable to identify the target object in the captured environment images, and thus unable to determine the target orientation. In this case, the lighting device can adjust the target included angle between the light source assembly and the axis vertical to the ground via the movement assembly, thereby changing the shooting range of the image acquisition module. After adjusting the target included angle, the lighting device re-controls the movement assembly to drive the light source assembly to rotate at least one full rotation to re-determine the target orientation and the environmental color information via the plurality of environment images acquired by the image acquisition module. If the image acquisition module still does not capture the target object after re-rotation, the target included angle can be adjusted again, followed by controlling the movement assembly to drive the light source assembly to rotate at least one full rotation. In addition, considering that the target included angle between the light source assembly and the axis vertical to the ground generally has a maximum value, each time the target included angle is adjusted, it can be adjusted by a preset angle, for example, the preset angle is 10°, etc.

Step 104: Controlling the movement assembly to drive the light source assembly to orient towards the target orientation, so as to acquire a target image of the target object via the image acquisition module and acquire spectral information of the target object via the spectral sensor.

After determining the target orientation, the lighting device needs to re-control the movement assembly to drive the light source assembly to orient towards the target orientation. After the light source assembly is oriented towards the target orientation, the lighting device needs to control the image acquisition module to acquire a target image of the target object and control the spectral sensor to acquire spectral information of the target object.

Step 105: Determining lighting parameters of the light source assembly according to the target object type, the environmental color information, the target image, the spectral information, and the target dimming model, and controlling the light source assembly to emit light according to the lighting parameters.

After acquiring the target image and spectral information of the target object, it is necessary to further determine the lighting parameters of the light source assembly according to the target object type, the environmental color information, the target image, the spectral information, and the target dimming model, and control the light source assembly to emit light according to the lighting parameters. Illustratively, the target object type, environmental color information, target image, and spectral information can be input into the target dimming model to output the lighting parameters of the light source assembly via the target dimming model. In one embodiment, the lighting parameters of the light source assembly comprise brightness, color temperature, and beam angle. The lighting device adjusts the brightness, color temperature, and beam angle of the light source assembly according to the lighting parameters, and then controls the light source assembly to emit light.

Based on the above embodiment, determining the lighting parameters of the light source assembly according to the target object type, the environmental color information, the target image, the spectral information, and the target dimming model in Step 105 comprises:

Step 1051: Determining object color information of the target image.

In another embodiment, the lighting device needs to extract object color information of the target image. The object color information comprises saturation, hue, and brightness.

Step 1052: Determining material information and color temperature information of the target object according to the spectral information.

In addition, the lighting device also needs to determine the material information and color temperature information of the target object according to the spectral information acquired by the spectral sensor. Specifically, the lighting device can calculate the color coordinates (x, y) of the light source assembly according to the spectral information. The color coordinates are parameters describing the position of the color of the light source assembly on a chromaticity diagram. The calculated color coordinates are then compared with the color coordinates of a standard blackbody radiation spectrum. The standard blackbody radiation spectrum is the radiation spectrum of a blackbody at different temperatures. The blackbody temperature with the smallest color difference from the color coordinates of the light source assembly is found by interpolation, which is the determined spectral color temperature. When determining the material information of the target object according to the spectral information, existing atomic emission spectroscopy, atomic absorption spectroscopy, X-ray fluorescence spectroscopy, etc., can be used. The specific process can refer to the prior art and will not be repeated in this embodiment.

Step 1053: Inputting the target object type, the environmental color information, the object color information, the material information, and the color temperature information into the target dimming model, so as to determine the lighting parameters of the light source assembly via the target dimming model.

After determining the object color information as well as the material information and color temperature information of the target object, the target object type, environmental color information, object color information, material information, and color temperature information can be further input into the target dimming model to determine the lighting parameters of the light source assembly via the target dimming model. Specifically, the coaxial arrangement ensures that the field of view of the image acquisition module 13 and the measurement spot of the spectral sensor 14 are aligned along the same optical axis. This physical configuration eliminates parallax errors that would occur if the sensors were offset. It ensures that the spectral information (representing material properties) acquired in step 104 corresponds exactly to the specific pixel region of the target object identified in the target image, thereby guaranteeing the accuracy of the data input into the dimming model.

In addition, in this embodiment, when training dimming models corresponding to different dimming modes, a training set for the dimming model needs to be constructed according to the following parameters:
Data Parameter (1): Saturation, hue, and brightness of the object image.
Data Parameter (2): Material information and color temperature information of the object.
Data Parameter (3): Saturation, hue, and brightness of the overall environment.
Data Parameter (4): Object type.
Data Parameter (5): Required lighting parameters.

When constructing the training set, Data Parameters (1) to (4) are input into a neural network model for training. The lighting parameters output by the neural network model during the training process are compared with the lighting parameters of Data Parameter (5) to determine an error. The network parameters output by the neural network model are adjusted according to the error until the error of the lighting parameters output by the neural network model is within a preset range, thereby obtaining a trained dimming model.

As described above, an embodiment of the present invention provides a lighting control method. In the embodiment of the present invention, after a user sets a required lighting object type and a dimming mode on a terminal device, the terminal device generates corresponding object type information and dimming mode information, and sends the object type information and the dimming mode information to the lighting device. After the lighting device determines the target object type and the target dimming model respectively according to the object type information and the dimming mode information, it controls the movement assembly to drive the light source assembly to rotate at least one full rotation, so as to identify a target orientation where the target object is located and environmental color information through a plurality of environment images acquired by the image acquisition module. Subsequently, the lighting device can control the movement assembly to drive the light source assembly to orient towards the target orientation, to acquire a target image of the target object via the image acquisition module and acquire spectral information of the target object via the spectral sensor, and determine lighting parameters of the light source assembly according to the target object type, the environmental color information, the target image, the spectral information, and the target dimming model, and control the light source assembly to emit light according to the lighting parameters. In the embodiment of the present invention, the lighting device can automatically identify a corresponding target object according to the object type required by the user to be illuminated and illuminate the target object, and the lighting effect is determined according to the dimming mode selected by the user, which can improve the lighting effect on the object and solve the technical problem in the prior art where the lighting effect is poor when using lights to illuminate objects. Additionally, the embodiment of the present invention does not require the user to manually set lighting parameters and adjust light positions during the lighting process, resulting in a high degree of intelligence and further improving the user experience.

An embodiment of the present invention further provides a lighting device. As shown in FIG. 6, FIG. 6 is a schematic circuit structure diagram of a lighting device provided by an embodiment of the present invention. The lighting device comprises a light source assembly 11, an information acquisition assembly 16, a movement assembly 12, and a communication module 15. The information acquisition assembly 16 is disposed on the light source assembly 11. The information acquisition assembly 16 comprises an image acquisition module 13 and a spectral sensor 14. The image acquisition module 13 and the spectral sensor 14 are coaxially arranged so that the imaging optical path of the image acquisition module 13 is consistent with the measurement optical path of the spectral sensor 14. The movement assembly 12 is configured to drive the light source assembly 11 to rotate. The communication module 15 is configured to communicate with a terminal device. The lighting device further comprises a processor 17 and a memory 18.

The memory 18 is configured to store a computer program 19 and transmit the computer program 19 to the processor 17.

The processor 17 is configured to execute the steps in the above-mentioned lighting control method embodiment according to instructions in the computer program 19.

Illustratively, the computer program 19 may be divided into one or more modules/units. The one or more modules/units are stored in the memory 18 and executed by the processor 17 to complete the present application. The one or more modules/units may be a series of computer program instruction segments capable of completing specific functions, and these instruction segments are used to describe the execution process of the computer program 19 in the lighting device 10.

The lighting device 10 may comprise, but is not limited to, a processor 17 and a memory 18. Those skilled in the art can understand that FIG. 6 is merely an example of the lighting device 10 and does not constitute a limitation on the lighting device 10. It may comprise more or fewer components than shown, or combine certain components, or have different components. For example, the lighting device 10 may further comprise input/output devices, network access devices, buses, etc.

The processor 17 may be a Central Processing Unit (CPU), or other general-purpose processors, Digital Signal Processors (DSP), Application Specific Integrated Circuits (ASIC), Field-Programmable Gate Arrays (FPGA) or other programmable logic devices, discrete gates or transistor logic devices, discrete hardware components, etc. The general-purpose processor may be a microprocessor, or the processor may be any conventional processor, etc.

The memory 18 may be an internal storage unit of the lighting device 10, such as a hard disk or memory of the lighting device 10. The memory 18 may also be an external storage device of the lighting device 10, such as a plug-in hard disk equipped on the lighting device 10, a Smart Media Card (SMC), a Secure Digital (SD) card, a Flash Card, etc. Furthermore, the memory 18 may comprise both an internal storage unit of the lighting device 10 and an external storage device. The memory 18 is configured to store the computer program and other programs and data required by the lighting device 10. The memory 18 may also be configured to temporarily store data that has been output or is about to be output.

Those skilled in the art can clearly understand that for the convenience and brevity of description, the specific working processes of the systems, devices, and units described above can refer to the corresponding processes in the foregoing method embodiments, and details are not repeated here.

In the several embodiments provided in the present application, it should be understood that the disclosed systems, devices, and methods may be implemented in other ways. For example, the device embodiments described above are merely illustrative. For instance, the division of units is merely a logical function division, and there may be other division manners in actual implementation. For example, multiple units or components may be combined or integrated into another system, or some features may be ignored or not executed. In another aspect, the shown or discussed mutual coupling or direct coupling or communication connection may be indirect coupling or communication connection through some interfaces, devices, or units, and may be in electrical, mechanical, or other forms.

The units described as separate components may or may not be physically separated, and the components displayed as units may or may not be physical units; that is, they may be located in one place or distributed across multiple network units. Part or all of the units may be selected according to actual needs to achieve the objectives of the solutions of the present embodiments.

In addition, functional units in various embodiments of the present invention may be integrated into one processing unit, or each unit may exist physically alone, or two or more units may be integrated into one unit. The above-integrated unit may be implemented in the form of hardware or in the form of a software functional unit.

If the integrated unit is implemented in the form of a software functional unit and sold or used as an independent product, it may be stored in a computer-readable storage medium. Based on such an understanding, the technical solution of the present invention essentially, or the part contributing to the prior art, or all or part of the technical solution, may be embodied in the form of a software product. The computer software product is stored in a storage medium and comprises several instructions for causing a computer device (which may be a personal computer, a server, or a network device, etc.) to execute all or part of the steps of the methods of various embodiments of the present invention. The aforementioned storage medium comprises: a USB flash drive, a mobile hard disk, a Read-Only Memory (ROM), a Random Access Memory (RAM), a magnetic disk, or an optical disc, and various other media capable of storing computer programs.

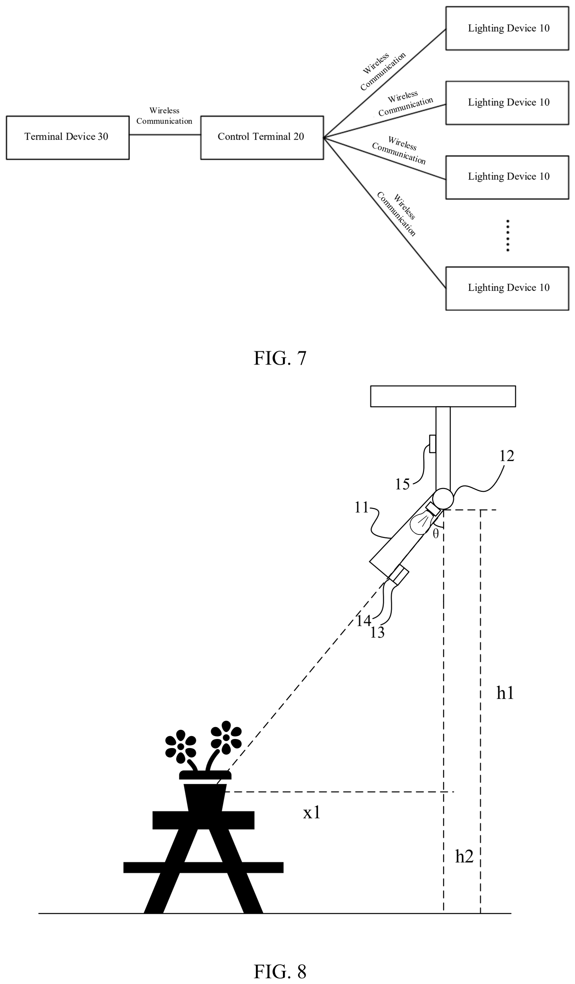

An embodiment of the present invention further provides a lighting control system. As shown in FIG. 7, FIG. 7 is a schematic structural diagram of a lighting control system provided by an embodiment of the present invention. The lighting control system comprises a control terminal 20 and a plurality of the above-mentioned lighting devices 10. The control terminal 20 is configured to communicate with each lighting device 10 and communicate with a terminal device 30. A map of the environmental space where the lighting devices 10 are located is set in the control terminal 20. The map records the coordinates of each lighting device 10, the installation height, and the orientation direction of the light source assembly when the rotation angle is at the zero point. In one embodiment, the control terminal may be a server in the cloud. The server is wirelessly connected to each lighting device and wirelessly connected to the terminal device. The map of the environmental space where the lighting devices are located is set in the server. A user can create a map after installing the lighting devices in the environmental space, record the coordinates, installation height, and orientation direction of the light source assembly when the rotation angle is at the zero point for each lighting device in the map, and then upload the map to the server.

The lighting device is further configured to upload a current rotation angle of the movement assembly to the control terminal after the light source assembly is oriented towards the target orientation.

The control terminal is configured to receive an object height corresponding to the target object type sent by the terminal device; and configured to, after receiving the rotation angle sent by each lighting device, determine target coordinates of the target object towards which each lighting device is oriented in the map according to the rotation angle, the installation height, and the object height; and configured to control the movement assembly of one of the lighting devices to rotate again to determine a new target orielntation whe2n a distance between target coordinates corresponding to any two lighting devices is within a preset distance.

In this embodiment, while inputting the object type in the terminal device, the user also needs to further input the object height where the object type is located. After determining the target object type according to the object type input by the user, the terminal device will send the object height corresponding to the target object type to the control terminal. The control terminal stores the object height after receiving it. In another embodiment, the user can also set the object height in the control terminal first and store it in the control terminal, and the control terminal subsequently directly calls the stored object height. Subsequently, when the lighting device controls the light source assembly to orient towards the target object via the movement assembly, it will determine the current rotation angle of the movement assembly and upload the rotation angle of the movement assembly to the control terminal.

After receiving the rotation angle uploaded by the lighting device, the control terminal can determine the azimuth of the target object towards which the lighting device is oriented relative to the lighting device in the map according to the rotation angle sent by each ligh3ting device. Then, according to the installation height, the rotation angle, and the object height, the distance of the target object relative to the lighting device in the horizontal direction can be determined. Illustratively, as shown in FIG. 8, FIG. 8 is a schematic diagram of a positional relationship between a target object and a lighting device provided by an embodiment of the present invention. In FIG. 8, a flowerpot placed on a table is taken as the target object, where h2 is the object height of the flowerpot, and h1 is the installation height of the lighting device. According to the positional relationship shown in FIG. 8 and the target included angle θ, the distance x1 of the target object relative to the lighting device in the horizontal direction can be calculated. Finally, the control terminal can determine the target coordinates of the target object in the map according to the azimuth of the target object relative to the lighting device and the distance from the lighting device.

After determining the target coordinates of the target object towards which each lighting device is oriented, the control terminal will further determine whether the distance between the target coordinates corresponding to any two lighting devices is within a preset distance. The preset distance can be set according to needs; for example, in this embodiment, the preset distance can be set to 10cm. When the distance between the target coordinates corresponding to any two lighting devices is within the preset distance, it indicates that these two lighting devices are illuminating the same target object. At this time, the control terminal needs to control the movement assembly of one of the lighting devices to rotate again to re-determine a new target object via the plurality of environment images acquired by the image acquisition module, thereby controlling the light source assembly to orient towards a new target orientation. It can be understood that the re-determined target object is different from the target object determined last time.

As described above, in the embodiment of the present invention, in the case where the control terminal confirms that two lighting devices are illuminating the same target object, it controls the movement assembly of one of the lighting devices to rotate again to search for a new target object for illumination, thereby improving the utilization rate of the lighting devices.

An embodiment of the present invention further provides a terminal device. The terminal device is communicatively connected to a plurality of the above-mentioned lighting devices. The terminal device is configured to, in response to a device selection instruction, determine a target lighting device from the plurality of lighting devices; and in response to a parameter setting instruction, determine object type information and dimming mode information, and send the object type information and the dimming mode information to the target lighting device; and in response to a rotation angle adjustment instruction, determine a target rotation angle, and send the target rotation angle to the target lighting device, so as to control the movement assembly of the target lighting device to rotate to the target rotation angle.

In this embodiment, a user can select a target lighting device required to be controlled on the terminal device, and set the object type and dimming mode required to be illuminated by the target lighting device. The specific setting process can refer to the description of Step 101 in the above embodiment, and details are not repeated in this embodiment. In addition, subsequently, after the target lighting device controls the light source assembly to orient towards the target object via the movement assembly, if the user finds that the target lighting device and other lighting devices are illuminating the same target object, the user can also re-control the orientation of the light source assembly of the target lighting device on the terminal device, so as to make the target lighting device orient towards a new target object. Specifically, a control interface for controlling the rotation angle of the lighting device is also provided on the terminal device. The user can operate on the control interface to send a rotation angle adjustment instruction to the terminal device. When the terminal device detects the rotation angle adjustment instruction, it determines a target rotation angle according to the rotation angle adjustment instruction, and sends the target rotation angle to the target lighting device, so as to control the movement assembly of the target lighting device to rotate to the target rotation angle. After the target lighting device rotates the movement assembly to the target rotation angle and orients towards a new object, it re-acquires a target image of the new target object and acquires spectral information of the new target object via the spectral sensor, so as to re-determine lighting parameters corresponding to the new target object.

As described above, an embodiment of the present invention further provides a terminal device. A user can control the rotation angle of the lighting device on the terminal device. In the case where the user confirms that two lighting devices are illuminating the same target object, the movement assembly of one of the lighting devices can be controlled via the terminal device to rotate again to search for a new target object for illumination, which improves the utilization rate of the lighting devices and also improves the flexibility of controlling the lighting devices.

An embodiment of the present invention further provides a storage medium comprising computer-executable instructions. The computer-executable instructions, when executed by a computer processor, are configured to execute a lighting control method. The lighting control method is applicable to a lighting device. The lighting device comprises a light source assembly, an information acquisition assembly, a movement assembly, and a communication module. The information acquisition assembly is disposed on the light source assembly. The information acquisition assembly comprises an image acquisition module and a spectral sensor. The image acquisition module and the spectral sensor are coaxially arranged. The movement assembly is configured to drive the light source assembly to rotate. The communication module is configured to communicate with a terminal device. The lighting control method comprises:
receiving object type information and dimming mode information sent by the terminal device via the communication module;
determining a target object type according to the object type information, and determining a target dimming model according to the dimming mode information;
controlling the movement assembly to drive the light source assembly to rotate at least one full rotation, so as to determine a target orientation and environmental color information based on a plurality of environment images acquired by the image acquisition module, wherein the target orientation is an orientation of a position where a target object corresponding to the target object type is located;
controlling the movement assembly to drive the light source assembly to orient towards the target orientation, so as to acquire a target image of the target object via the image acquisition module and acquire spectral information of the target object via the spectral sensor; and
determining lighting parameters of the light source assembly according to the target object type, the environmental color information, the target image, the spectral information, and the target dimming model, and controlling the light source assembly to emit light according to the lighting parameters.

It should be noted that the above are merely preferred embodiments and applied technical principles of the present invention. Those skilled in the art will understand that the present invention is not limited to the specific embodiments described herein, and various obvious changes, readjustments, and substitutions can be made by those skilled in the art without departing from the protection scope of the present invention. Therefore, although the present invention has been described in detail through the above embodiments, the present invention is not limited to the above embodiments. Other equivalent embodiments may be included without departing from the concept of the present invention, and the scope of the present invention is determined by the scope of the appended claims.

## Claims

1. A lighting control method applicable to a lighting device, wherein the lighting device comprises a light source assembly (11), an information acquisition assembly (16), a movement assembly (12), and a communication module (15), the information acquisition assembly (16) is disposed on the light source assembly (11), the information acquisition assembly (16) comprises an image acquisition module (13) and a spectral sensor (14), the image acquisition module (13) and the spectral sensor (14) are coaxially arranged, the movement assembly (12) is configured to drive the light source assembly (11) to rotate, and the communication module (15) is configured to communicate with a terminal device (30), the method comprises:
receiving object type information and dimming mode information sent by the terminal device (30) via the communication module (15);
determining a target object type according to the object type information, and determining a target dimming model according to the dimming mode information;
controlling the movement assembly (12) to drive the light source assembly (11) to rotate at least one full rotation, so as to determine a target orientation and environmental color information based on a plurality of environment images acquired by the image acquisition module (13), wherein the target orientation is an orientation of a position where a target object corresponding to the target object type is located;
controlling the movement assembly (12) to drive the light source assembly (11) to orient towards the target orientation, so as to acquire a target image of the target object via the image acquisition module (13) and acquire spectral information of the target object via the spectral sensor (14); and
determining lighting parameters of the light source assembly (11) according to the target object type, the environmental color information, the target image, the spectral information, and the target dimming model, and
controlling the light source assembly (11) to emit light according to the lighting parameters.

2. The lighting control method according to claim 1, wherein the step of determining lighting parameters of the light source assembly (11) according to the target object type, the environmental color information, the target image, the spectral information, and the target dimming model comprises:
determining object color information of the target image;
determining material information and color temperature information of the target object according to the spectral information; and
inputting the target object type, the environmental color information, the object color information, the material information, and the color temperature information into the target dimming model, so as to determine the lighting parameters of the light source assembly (11) via the target dimming model.

3. The lighting control method according to claim 1, wherein the step of controlling the movement assembly (12) to drive the light source assembly (11) to rotate at least one full rotation, so as to determine a target orientation and environmental color information based on a plurality of environment images acquired by the image acquisition module (13) comprises:
controlling the movement assembly (12) to drive the light source assembly (11) to rotate at least one full rotation, and during the rotation, periodically controlling the image acquisition module (13) to acquire environment images;
after the movement assembly (12) completes the rotation, identifying a target object corresponding to the target object type in the plurality of environment images captured by the image acquisition module (13);
determining a rotation angle of the movement assembly (12) at the time when the environment image containing the target object was acquired, and
determining the target orientation of the target object according to the rotation angle; and determining the environmental color information according to the plurality of environment images.

4. The lighting control method according to claim 3, wherein the step of determining the environmental color information according to the plurality of environment images comprises:
determining color information of each of the environment images, wherein the color information comprises saturation, hue, and brightness; and
determining a saturation average value, a hue average value, and a brightness average value of all the environment images to obtain the environmental color information.

5. The lighting control method according to claim 3, wherein the step of determining a rotation angle of the movement assembly (12) at the time when the environment image containing the target object was acquired, and determining the target orientation of the target object according to the rotation angle comprises:
determining a capturing time of each environment image containing the target object, and
determining a target environment image that is captured at the earliest capturing time; and determining the target orientation of the target object according to the rotation angle of the movement assembly (12) when acquiring the target environment image.

6. The lighting control method according to claim 3, wherein the movement assembly (12) is further configured to adjust a target included angle between the light source assembly (11) and an axis vertical to the ground; and in a case where the target orientation cannot be determined from the plurality of environment images, the method further comprises:
adjusting the target included angle via the movement assembly (12), and subsequently controlling the movement assembly (12) to drive the light source assembly (11) to rotate at least one full rotation, so as to re-determine the target orientation and the environmental color information via a plurality of environment images acquired by the image acquisition module (13).

7. A lighting device, comprising a light source assembly (11), an information acquisition assembly (16), a movement assembly (12), and a communication module (15), wherein the information acquisition assembly (16) is disposed on the light source assembly (11), the information acquisition assembly (16) comprises an image acquisition module (13) and a spectral sensor (14), the image acquisition module (13) and the spectral sensor (14) are coaxially arranged, the movement assembly (12) is configured to drive the light source assembly (11) to rotate, the communication module (15) is configured to communicate with the lighting device, and wherein the lighting device further comprises a processor (17) and a memory (18); the memory (18) is configured to store a computer program, and transmit the computer program to the processor (17); and the processor (17) is configured to execute the lighting control method according to any one of claims 1 to 6 based on instructions in the computer program.

8. A lighting control system, comprising a control terminal (20) and a plurality of the lighting devices (10) according to claim 7, the control terminal (20) is configured to communicate with each of the lighting devices (10) and to communicate with a terminal device (30), a map of an environmental space where the lighting devices (10) are located is set in the control terminal (20), and the map records coordinates of each of the lighting devices (10), an installation height, and an orientation direction of the light source assembly (11) when a rotation angle is at a zero point; the lighting device (10) is further configured to upload a current rotation angle of the movement assembly (12) to the control terminal (20) after the light source assembly (11) is oriented towards the target orientation; and the control terminal (20) is configured to receive an object height corresponding to the target object type sent by the terminal device (30); and configured to, after receiving the rotation angle sent by each of the lighting devices (10), determine target coordinates of the target object towards which each of the lighting devices (10) is oriented in the map according to the rotation angle, the installation height, and the object height; and configured to control the movement assembly (12) of one of the lighting devices (10) to rotate again to determine a new target orientation when a distance between target coordinates corresponding to any two of the lighting devices (10) is within a preset distance.

9. A terminal device, wherein the terminal device is communicatively connected to a plurality of the lighting devices (10) according to claim 7, the terminal device is configured to, in response to a device selection instruction, determine a target lighting device from the plurality of lighting devices, and in response to a parameter setting instruction, determine object type information and dimming mode information, and send the object type information and the dimming mode information to the target lighting device; and in response to a rotation angle adjustment instruction, determine a target rotation angle, and send the target rotation angle to the target lighting device, so as to control the movement assembly of the target lighting device to rotate to the target rotation angle.

10. A storage medium storing computer-executable instructions, wherein the computer-executable instructions, when executed by a computer processor, are configured to execute the lighting control method according to any one of claims 1 to 6.
